# EUROPEAN PATENT APPLICATION

(11) **EP 2 797 029 A1**
(43) Date of publication of application: **29.10.2014**
(21) Application number: 13305548.3
(22) Date of filing: 26.04.2013
(51) Int. Cl.: G06K 9/00

(54) **A method and a device for a driving assistance system**

(71) Applicant: ALCATEL LUCENT, 92100 Boulogne-Billancourt (FR)
(72) Inventor: Templ, Wolfgang, 70435 Stuttgart (DE)
(74) Representative: Kröhnert, Michael

(57) **Abstract**

The invention concerns a method for a driving assistance system, comprising
receiving information from a first image (121, 122, 123),
determining the position of a first vehicle (101, 102, 103) relative to a second vehicle (101, 102, 103) from the information from the first image (121, 122, 123) and predetermined information from a second image (121, 122, 123).

The invention concerns also a device (200, 300) for a driving assistance system comprising means operable to perform the steps of this method.

## Description

### Field of the invention

The invention relates to a method and a device for a driving assistance system.

### Background

Driving assistance systems are used in vehicles to assist the driver of a vehicle in particular in complex traffic situations. Such driving assistance systems gather information about the traffic situation from sensor readings of sensors mounted to the vehicle. Based on this sensor information, the driving assistance system determines situation-based information that is, for example, displayed to the driver of the vehicle.

With the advent of car-to-car communication systems more complex driving assistance systems use information of sensors from multiple vehicles. In this scenario it is of importance to consider not only the sensor readings, but also the positions of the vehicles that the sensor is mounted to.

To determine the position of the vehicles, the global positioning system receiver mounted to the vehicles is used. However, the global positioning system signal is not available in all driving situations. For example, to vehicles driving in a tunnel or in a street between high rise buildings, the signal is not available.

### Summary

The object of the invention is thus to provide a reliable and robust method and device for driving assistance system.

The main idea of the invention is to receive information from a first image, determine the position of a first vehicle relative to a second vehicle from the information from the first image and pre-determined information from a second image. This way, the position of the vehicles relative to each other is determined reliably.

Advantageously, the position is determined by comparing information from the content of the images, and sorting the position of the vehicles depending on the result of the comparison. Comparing the information from the content allows identifying the absolute position derived from the content of the image with respect to the scenery surrounding the vehicle capturing the image. Sorting the position of the vehicles depending on the result of the comparison is an easy and robust way of determining the position of the vehicles from their absolute position with respect to the scenery surrounding the vehicles.

Advantageously, the position of the vehicles is determined by sorting depending on the time the images are captured. Considering the time as well allows determining the position of the vehicles more exactly.

Advantageously, the information from the content of images captured within a pre-determined time interval is compared. This reduces the amount of data to be evaluated by limiting the considered images to a configurable pre-determined time interval.

Advantageously, an alert message is received and an alert is triggered depending on the relative position of the vehicles. This way, in a complex traffic situation, the driving assistance system automatically evaluates the alert message sent by any of the vehicles. Triggering the alert depending on the relative position of the vehicles increases robustness and reduces false alerts.

Advantageously, the information from the content is determined by automated pattern recognition. While other methods of analyzing the content may be used, automated pattern recognition is a preferred way of determining the information. This increases reliability.

Advantageously, the information from the relative positions of the vehicles is sent. Sending the information from the relative position allows distributing the information to another vehicle.

Further developments of the invention can be gathered from dependent claims and the following description.

### Brief description of the figures

In the following, the invention will be explained further making reference to the attached drawings.
Figure 1 schematically shows part of a road and scenery.
Figure 2 schematically shows part of a first device.
Figure 3 schematically shows part of a second device.
Figure 4 schematically shows some steps of a method.

### Description of the embodiments

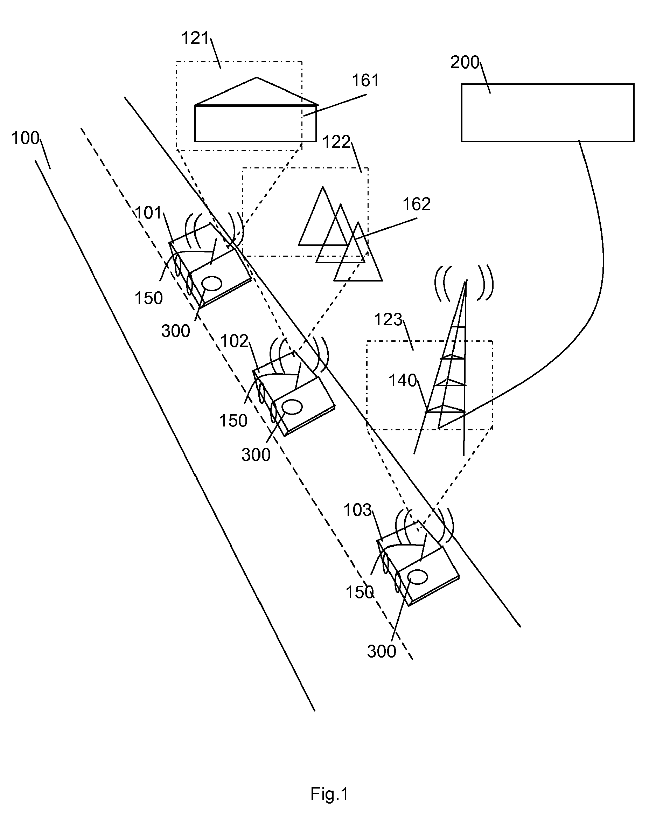

Figure 1 schematically shows part of a road 100 and surrounding scenery. The scenery comprises in this example a house 161 and a group of three trees 162. Furthermore, the scenery comprises a server antenna 140. In this example, the house 161, the group of trees 162 and the server antenna 140 are located on the same side of the road 100 within sight of a driver of a vehicle driving on the road 100.

The scenery may comprise any other object. In particular, depending on the landscape that the driver can see when driving the vehicle on the road 100 may comprise any other type of objects.

According to figure 1, three vehicles are driving on the same lane of the road 100. A first vehicle 101, a second vehicle 102 and a third vehicle 103 are depicted schematically in figure 1. The vehicles 101, 102, 103 in this example comprise a client antenna 150 each. The client antenna 150 is, for example, an antenna suitable to transfer data between the server antenna 140 and the client antenna 150 according to the long-term evolution standard (well knows as LTE). Any other wireless communication link such as a wireless local area network connection according to the well-known IEEE802.11 standard may be used. The vehicles sending messages are in this example identified by a unique identification, e.g. the vehicle identification number. Any other identification, e.g. the media access control address, well known as MAC, may be used.

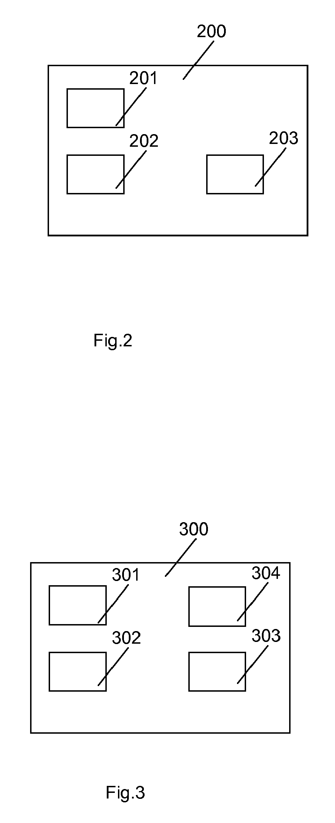

Furthermore, the vehicles 101, 102, 103 comprise a first device labelled client 300. The client 300 is depicted in figure 3 schematically.

The client 300 comprises a client receiver 301, a client processor 302, a client sender 303 and an output 304.

The client receiver 301 and the client sender 303 are adapted to transmit messages via the client antenna 150, for example according to the transmission control protocol/ internet protocol (well-known as TCP/IP). Any other type of protocol may be used to transmit the message such as the simple mail transfer protocol (well-known as SMTP).

The output 304 is adapted to output information visible, perceptible, or audible to the driver of the vehicle or to an electrical interface to the vehicle. The output 304 is, for example, a head-up display mounted to the dashboard of the vehicle. The output may also be a loudspeaker mounted in the vehicle or a vibrating device mounted to the steering wheel. In any case, the output 304 is adapted to output an information or alarm for the driver. The alarm may for example be a message displayed on the head-up display, a vibration of the steering wheel or a sound played via the loudspeaker. Optionally the alarm may trigger emergency subsystems of the vehicle via above mentioned electrical interface.

The client processor 302 is adapted to process the information received by the client receiver 301 and to send information via the client sender 303 in messages. Furthermore, the client processor 302 is adapted to trigger the output 304 to output the information or alarm. To that end, the client receiver 301, the client processor 302, the client sender 303 and the output 304 are connected in the client 300, for example by a data bus. The antenna 150 may be connected to the sender 303 and the receiver 301 as well via a link not depicted.

Figure 1 depicts a first image 121, a second image 122 and a third image 123.

The first image 121, according to the example, comprises of a part of the house 161. The second image 122 comprises of a part of the group of trees 162. The third image 123 comprises of the part of the server antenna 140.

According to the example, the vehicles 101, 102, 103 are equipped with capturing devices, for example a digital camera comprising a charge-coupled device adapted to capture images of the landscape surrounding the respective vehicle. According to the example, the capturing device is mounted to the vehicles to capture images of a part of the landscape surrounding the vehicle at a pre-determined angle. As depicted in figure 1, the angle is selected to cover the landscape to the right-front of the vehicle in forward driving direction

The capturing device itself is not depicted in figure 1. The capturing device in this example is connected to the client 300 e.g. the data bus via a data link. To that end, the client 300 comprises a connector not depicted in figure 3. The connection is, for example, according to the well-known Ethernet protocol. Any other type of connection, such as a controller area network (well-known as CAN), may be used. Furthermore, the client 300 and the capturing device as well as the antenna may be integrated into a single device.

The mounting position of the capturing device and the angle at which the capturing device captures the images may be any other mounting position or angle. For example, the capturing device may be mounted and configured with an angle to take images of the front-left area of the vehicle in driving direction.

According to the example, the first vehicle 101, the second vehicle 102 and the third vehicle 103 are equipped with the same capturing device taking images of the same angle. However, the mounting position and the angle of the capturing devices may be different for each of the vehicles.

Depicted in figure 1 is a server 200. The server 200 is connected according to the example to the server antenna 140 via a link.

The server 200 comprises a server receiver 201, a server processor 202, and a server sender 203 as depicted in figure 2.

The server receiver 201 and the server sender 203 are adapted as the client sender 303 and the client receiver 301 to transmit messages. The server receiver 201, the server processor 202 and the server sender 203 are connected in the server 200, for example via a data bus. The server processor 202 is adapted to receive information via the server receiver 201 and to send information via the server sender 203 and the server antenna 140.

Figure 1 depicts a first embodiment of the invention using the server 200. In a second embodiment of the invention, the server 200 is integrated into the client 300 of the first vehicle 101, the second vehicle 102 or the third vehicle 103. In this case, the server receiver 201 and the client receiver 301 may be the same device. Likewise, in this case the server sender 203 and the client server 303 may be the same device. Furthermore, the server processor 202 and the client processor 302 may be the same as well. The server antenna 140 in this case may not be part of the embodiment and may be any other type of antenna or construction in the scenery.

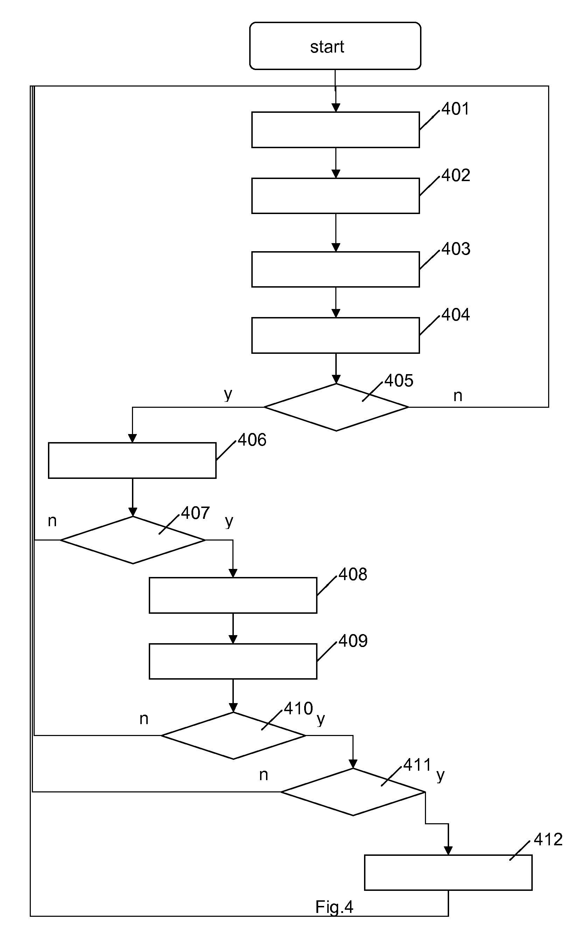

A method for a driving assistance system is described below making reference to figure 4. The method, for example, starts whenever the vehicle is turned on. Alternatively, the method may start in case the driver selects the driving assistance system, for example via a switch in the vehicle. After the start a step 401 is executed.

In step 401, a time interval is determined. For example, the time interval is determined to be 10 seconds before the current time. Alternatively, the length of the interval may depend on the vehicle speed. The time interval is in this case for example determined from the length of the time needed or estimated for a save braking reaction, e.g. to stand still, at the current vehicle speed. Afterwards, a step 402 is executed.

In step 402, an image is captured. Afterwards, a step 403 is executed.

In step 403, the information from the captured image is determined. As information from the captured image, for example, a characteristic bit pattern is determined by automated pattern recognition. Furthermore, the information from the captured image may comprise the time stamp that is the current time the image was captured. The time in this context may be measured as coordinated universal time (well-known as UTC). Afterwards, a step 404 is executed.

In step 404, the captured image and optionally the information from the captured image are stored. This means that the information from a captured image is stored as pre-determined information from the image. Optionally, the information from the captured image is sent, for example broadcast. To identify the sending vehicle, for example the unique identification, e.g. the vehicle identification number is used.

Afterwards, a step 405 is executed.

In step 405, a test is performed to determine if information from another image has been received. In case information from another image has been received, step 406 is executed. Otherwise, step 401 is executed. This means that capturing of images is immediately repeated unless another image has been received from another vehicle. Alternatively the step of repeated capturing is a parallel process capturing the images continuously while driving. In this case a state variable may be used to trigger the handover of captured images for further processing.

Afterwards, a step 406 is executed.

In step 406, the received information from the other image is compared to the pre-determined information from the captured image. In case the capturing of images has been repeated, several pre-determined images may exist. In this case the received information is compared to the pre-determined information of several images. According to the example, the received information comprises of the time stamp of the time the received image has been taken. Accordingly, the pre-determined information from the captured images is selected depending on whether the respective information is within the pre-determined interval around the time stamp of the received information. For example, all pre-determined information from the captured images is looked up that have the time stamp within the interval. This may be a data base lookup. The received information from the other image according to the example is also a characteristic bit pattern. The characteristic bit pattern has in the example been determined by automated pattern recognition at the sender of the other image. Alternatively, the sender of the other image may simply send the image without any pattern recognition processing. In this case, step 406 comprises additionally a step of pattern recognition on the other image before comparing the received information.

Afterwards, a step 407 is executed.

In step 407 a test is performed to determine if similar or matching information is found. For example, similar or matching information is found if the characteristic bit pattern of the pre-determined image and the other image match. To increase robustness, the similarity may be adjusted. In case similar or matching information is found, a step 408 is executed. Otherwise, no correlation between the received image and the pre-determined image is found step 401 is executed. This means that the vehicles have not captured similar images in the time interval and hence indicates that they are e.g. not close to each other. Additionally a plausibility check may be performed before this test, in order to detect errors in the received image, such as noise or lack of contrast. As result of such plausibility check the method may pause until a plausible image has been received.

Afterwards a step 408 is executed.

In step 408, the order of the vehicles is sorted, for example by determining the distance and order from the time stamps of the respective images. The unique identification of the vehicles, e.g. the vehicle identification number, is used to allocate the matching images for each of the vehicle. According to the example, the first vehicle 101 captured the first image 121 comprising part of the building 161. Furthermore, according to the example, the third vehicle 103 captured the third image 123 comprising part of the server antenna 140. According to this example, the first vehicle 101 is driving in front of the third vehicle 103. Furthermore, according to the capturing steps described above, the first vehicle 101 captured similar images than the second vehicle 102 and the third vehicle 103 while passing the same position on the road 100 as the second vehicle 102 and the third vehicle 103. However, the time stamp of these similar images is different because the first vehicle 101 passed respective positions before the second vehicle 102 and the third vehicle 103.

This means that the pre-determined information from the captured images of the first vehicle 101 already comprises images similar to the images the second vehicle 102 and the third vehicle 103 take while they pass the road 100 in the same direction as the first vehicle 101. Furthermore, this means that the images the second vehicle 102 and the third vehicle 103 take will have different, later, time stamps than the images of the first vehicle 101. Considering the time stamps of the respective images and the fact that a similarity can be established, for example by automated pattern recognition between the characteristic bit pattern of the image captured by the first vehicle 101 while it was at the current position of the third vehicle 103 and the image the third vehicle 103 captures at this position at the current time, the order of the first and the third vehicle can be established. Likewise, from the fact that the image taken by the second vehicle 102 at its current position has a similarity to the characteristic bit pattern of a similar image taken by the first vehicle 101 at a previous time, the relative position of the second vehicle 102 to the first vehicle 101 can be established. Considering that the second vehicle 102 already captured an image similar to the image of the third vehicle 103 at its current position on the road 100, the position of the second vehicle 102 relative to the third vehicle 103 can be established. Hence, as a result, the order of the vehicles can be established by comparing the received information from images and sorting the vehicles depending on the received information. Afterwards, a step 409 is executed.

In step 409, information from the relative position of the vehicles is sent, e.g. broadcast. The unique vehicle identification, e.g. the vehicle identification number, is for example used to allocate the positions to the matching vehicle. This step 409 is optional and used in case the information shall be distributed to other vehicles. Afterwards, a step 410 is executed.

In step 410, it is determined whether an alert message has been received. An alert message in this context may be an indication of a critical traffic situation or an emergency braking of any of the vehicles within range. In case an alert message has been received, a step 411 is executed. Otherwise, step 401 is executed. The alert message may be sent by any other vehicle, e.g. by a car2car communication system. The vehicle sending the alert message is for example identified by the unique identification, e.g. the vehicle identification number.

In step 411, a test is performed to determine if the alert message is received from a vehicle driving in front of the vehicle receiving the alert message. To this end for example the unique vehicle identification, e.g. the vehicle identification number, is used to allocate the position of matching vehicles. In that case, a step 412 is executed. Otherwise, step 401 is executed. In order to determine if the alert message is received from a vehicle driving in front of the receiving vehicle, the relative position of the vehicles is used to determine whether the sending vehicle is in front of the receiving vehicle or not.

In step 412, an alert is triggered. For example, the message "emergency braking" or "traffic jam" is output. Alternatively, an audio signal may be triggered or an emergency subsystem of the car may be triggered via an electrical interface. Afterwards, step 401 is executed. Alternatively the alert is triggered by handover of a state variable to a parallel process adapted to trigger above mentioned message. The method ends, for example, whenever the vehicle is switched off.

The method described above may be executed in any of the clients 300 or the server 200. This means that either at a certain area of the road 100 a driving assistance system is installed that contains a server 200 that performs the steps of the method described above, except for the capturing of the images. Furthermore, this means that the clients 300 may send the captured image directly to the server 200. This has the additional advantage that the server 200 performs the automated pattern recognition for all of the clients 300. Alternatively, the clients 300 may perform the pattern recognition and send only the pattern as recognized. This has the advantage that the data traffic is reduced.

Additionally or alternatively each client 300 may perform the steps of the method described above. In this case each client 300 may be adapted to not only perform the pattern recognition, but also to perform the other steps of the method described above.

The description and drawings merely illustrate the principles of the invention. It will thus be appreciated that those skilled in the art will be able to devise various arrangements that, although not explicitly described or shown herein, embody the principles of the invention. All statements herein reciting principles, aspects, and embodiments of the invention, as well as specific examples thereof, are intended to encompass equivalents thereof.

The functions of the various elements shown in the figures, including any functional blocks labelled as 'processors', may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term 'processor' or 'controller' should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that the flow chart represents various processes which may be substantially represented in computer readable medium and so executed by a computer or processor, whether or not such computer or processor is explicitly shown.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

## Claims

1. A method for a driving assistance system, **comprising**
receiving (405) information from a first image (121, 122, 123),
determining (406, 407, 408) the position of a first vehicle (101, 102, 103) relative to a second vehicle (101, 102, 103) from the information from the first image (121, 122, 123) and predetermined information from a second image (121, 122, 123).

2. The method according to claim 1, comprising determining the position by
comparing (406, 407) information from the content of the images (121, 122, 123), and
sorting (408) the position of the vehicles (101, 102, 103) depending on the result of the comparison.

3. The method according to claim 1 or 2, wherein the position of the vehicles (101, 102, 103) is determined by sorting depending on the time the images (121, 122, 123) are captured.

4. The method according to claims 2 or 3, comprising comparing information from the content of images (121, 122, 123) captured within a predetermined time interval.

5. The method according to claim 1 to 4, comprising
receiving (410) an alert message, and
triggering (411, 412) an alert depending on the relative position of the vehicles (101, 102, 103).

6. The method according to any of the aforementioned claims, comprising determining the information from the content by automated pattern recognition.

7. The method according to any of the aforementioned claims, comprising sending (409) the information from the relative position of the vehicles (101, 102, 103).

8. A device (200, 300) for a driving assistance system comprising means **operable to** perform the steps of the method of claim 1.

9. The device (200, 300) according to claim 8, comprising
a receiver (201, 301) adapted to receive information from a first image (121, 122, 123),
a processor (202, 302) adapted to determine the position of a first vehicle (101, 102, 103) relative to a second vehicle (101, 102, 103) from the information from the first image (121, 122, 123) and predetermined information from a second image (121, 122, 123).

10. The device (200, 300) according to claim 8 or 9, wherein the processor (202, 302) is adapted to determine the position by
comparing information from the content of the images (121, 122, 123), and
sorting the position of the vehicles (101, 102, 103) depending on the result of the comparison.

11. The device (200, 300) according to claims 8 to 10, wherein the processor (202, 302) is adapted to determine the position of the vehicles (101, 102, 103) by sorting depending on the time the images (121, 122, 123) are captured.

12. The device (200, 300) according to claims 8 to 11, wherein the processor (202, 302) is adapted to compare information from the content of images (121, 122, 123) captured within a predetermined time interval.

13. The device (200, 300), according to claims 8 to 12, wherein
the receiver (201, 301) is adapted to receive an alert message, and
the processor (202, 302) is adapted to trigger an alert depending on the relative position of the vehicles (101, 102, 103).

14. The device (200, 300) according to claims 8 to 13, wherein the processor (202, 302) is adapted to determine the information from the content by automated pattern recognition.

15. The device (200, 300) according to claims 8 to 14, comprising a sender (203, 303) adapted to send the information from the relative position of the vehicles (101, 102, 103).
